# EUROPEAN PATENT APPLICATION

(11) **EP 4 324 735 A1**
(43) Date of publication of application: **21.02.2024**
(21) Application number: 22191136.5
(22) Date of filing: 19.08.2022
(51) Int. Cl.: B63B 35/44

(54) **A FLOATING STRUCTURE**

(71) Applicant: SolarDuck Holding B.V., 6623 MC Nijmegen (NL)
(72) Inventor: Huiskamp, Ewoud, 2623 MK Delft (NL); Hendriksen, Hendrik, 3772 VV Barneveld (NL); Hoogendoorn, Cornelis Frans Donald, 2803 AW Gouda (NL)
(74) Representative: De Vries & Metman

(57) **Abstract**

A floating structure (1) for supporting PV panels comprises a frame (2) extending in a main plane and a plurality of elongate buoyant members (5) having respective longitudinal directions which extend in transverse direction of the main plane. Each of the buoyant members (5) has an upper part (5a) which is located at the frame (2) and a lower part (5b) which projects from a lower side (4) of the frame (2). The frame (2) has a three-dimensional truss structure comprising interconnected beams, wherein the upper parts (5a) of the buoyant members (5) form upright beams of the truss structure.

## Description

The present invention relates to a floating structure for supporting PV panels.

Such a floating structure is known from WO 2022/135730. The known floating structure is part of a plurality of interconnected platforms which are intended to be located offshore. Each of the platforms has a plurality of buoyant members which support the platform. The platforms are substantially triangular in planform. Adjacent triangular platforms are pivotably connected to each other.

An object of the invention is to provide an improved floating structure.

This object is accomplished with the floating structure according to the invention which comprises a frame extending in a main plane and a plurality of elongate buoyant members having respective longitudinal directions which extend in transverse direction of the main plane, wherein each of the buoyant members has an upper part which is located at the frame and a lower part which projects from a lower side of the frame, wherein the frame has a three-dimensional truss structure comprising interconnected beams, wherein the upper parts of the buoyant members form upright beams of the truss structure.

An advantage of the floating structure according to the invention is that the upper part of the buoyant member is integral with the three-dimensional truss structure, which provides a robust structure. Furthermore, the buoyant members have two functions, i.e. improve robustness of the floating structure and providing buoyancy, which means an efficient use of material. If under operating conditions the frame is located above water level the upper part of the buoyant member functions as a reinforcement. If under operating conditions the frame is located below water level or partly below water level the upper part of the buoyant member functions as a reinforcement as well as a buoyancy. The upper part also provides a volume which can be used for accommodating other equipment, for example equipment which should preferably be kept in an isolated space. Similarly, the lower part also provides a volume which can be used for accommodating other equipment or ballast, for example.

It is noted that the floating structure may also be suitable for supporting an alternative superstructure, for example a wind turbine.

The upper part may have a lower connector and an upper connector for being connected to respective beams of the truss structure, which lower and upper connectors are located at a distance from each other in longitudinal direction of the buoyant member.

The frame may have a substantially polygonal shape within the main plane including a plurality of corners.

Preferably, the buoyant members are located at the corners since this maximizes stability and optimizes hydrodynamic performance of the floating structure.

The floating structure may have coupling members for coupling it to another floating structure, wherein the coupling members are mounted at the corners in case the buoyant members are located at the corners. This is advantageous since the buoyant members provide relatively high rigidity at the corners of the frame. The coupling members may form projections which are directed outwardly from the floating structure, for example in the form of tripods.

The frame may have a triangular shape.

In a preferred embodiment the buoyant members have circular cross-sections since this minimizes drag loads under operating conditions. Nevertheless, the buoyant members may have polygonal cross-sections, elliptical cross-sections or the like.

The length of the lower part may be different from and preferably larger than the length of the upper part as measured in longitudinal direction of the buoyant member.

The upper part and the lower part may be separate elements which are fixed to each other. This provides the opportunity to transport the elongate buoyant members as separate smaller parts to a site where they are assembled. For example, the upper part and the lower part may be dimensioned such that they fit in a standard sea container. An additional advantage is that it provides the opportunity to apply lower parts which have different dimensions and/or shapes. For example, the upper parts and the frame may have standardized dimensions and/or shapes whereas the lower parts may vary from one floating structure to the other.

The upper part and the lower part may be provided with cooperating flanges through which the upper part and the lower part are attached to each other. When the flange is located at an outer side of the buoyant member it may function as a spray rail in case the flange is located above water level under operating conditions or as a heave plate in case the flange is locate below water level under operating conditions.

At the location where the upper part and the lower part are fixed to each other a reinforcement element, for example a circumferential reinforcement plate, may be provided at an inner side or an outer side of the buoyant member.

In an embodiment the upper part has a circumferential wall including a lower end portion which has a larger cross-sectional area than an upper end portion thereof, wherein the circumferential wall diverges in a direction from its upper end portion to its lower end portion such that two of the same upper parts as separate elements partly fit into each other and an upper closure at an axial upper end of the upper part. An advantage of this embodiment is that a plurality of identical upper parts can be partly nested within each other during transport to a destination before assembly of the floating structure, which saves transport volume. The circumferential wall of the upper part may be conical or frustoconical or may have a pyramid shape or the like.

In a particular embodiment the lower connector is located at an outer side of the lower end portion and the upper connector is located at an upper side of the upper closure.

The upper connector and/or lower connector may be projections, which are preferably welded to the upper part. Preferably, the projections are only at the outer side of the lower end portion of the upper part, whereas at a distance from the lower end portion the outer side of the circumferential wall is substantially free from projections. Hence, nesting of the upper parts remains possible.

The lower part may also have a circumferential wall including a lower end portion which has a smaller cross-sectional area than an upper end portion thereof, wherein the circumferential wall diverges in a direction from its lower end portion to its upper end portion such that two of the same lower parts as separate elements partly fit into each other and a lower closure at an axial lower end of the lower part in order to enable partly nesting of a plurality of lower parts. The circumferential wall of the lower part may be conical or frustoconical or may have a pyramid shape or the like.

The lower part may be releasably fixed to the upper part, for example by means of bolting.

Similarly, the interconnected beams of the frame may be releasably fixed to each other. Such a modular floating structure provides the opportunity to transport all separate elements to a site where they are assembled to form the floating structure. Nevertheless, the beams may also be welded to each other, for example.

The invention will hereafter be elucidated with reference to very schematic drawings showing embodiments of the invention by way of example.
Fig. 1 is a perspective view of an embodiment of a floating structure according to the invention.
Fig. 2 is a similar view as Fig. 1, but showing an enlarged part thereof.
Fig. 3 is a similar view as Fig. 1, showing two interconnected identical floating structures.
Fig. 4 is a perspective view of a series of parts of the floating structure as shown in Fig. 3.
Fig. 5 is a similar view as Fig. 1, but showing an intermediate configuration of the floating structure.
Fig. 6 is a similar view as Fig. 1, illustrating a final configuration of the floating structure.
Fig. 7 is a similar view as Fig. 1, showing an alternative embodiment.

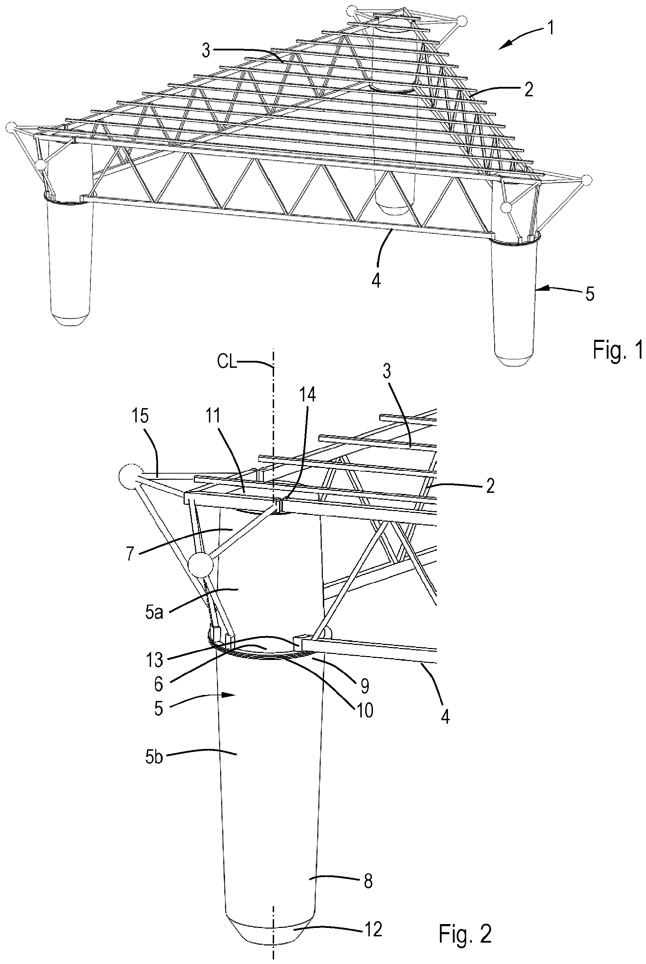

Fig. 1 shows an embodiment of a floating structure 1 according to the invention. The floating structure 1 is intended for supporting PV panels (not shown) and to be installed offshore. The floating structure 1 comprises a frame 2 which has a three-dimensional truss structure comprising interconnected beams. The frame 2 extends in a main plane and has an upper side 3 and a lower side 4. In the embodiment as shown in Fig. 1 the frame 2 has an equilateral triangular shape within the main plane and includes three corners, but an alternative embodiment (not shown) may have a different polygonal shape including a plurality of corners.

The floating structure 1 comprises three elongate buoyant members 5 which are located at the respective corners of the frame 2. Fig. 2 shows one of the buoyant members 5 in more detail. Each of the buoyant members 5 has a centreline CL in its longitudinal direction which extends perpendicularly to the main plane. The buoyant members 5 have circular cross-sections.

Each of the buoyant members 5 comprises an upper part 5a which is located at the frame 2 above the lower side 4 thereof and a lower part 5b which projects from the lower side 4 of the frame 2. The length of the lower part 5b is larger than the length of the upper part 5a as measured along the centreline CL. Fig. 2 shows that the upper part 5a forms an upright beam of the truss structure of the frame 2. This means that the upper part 5a is integrated in the frame 2.

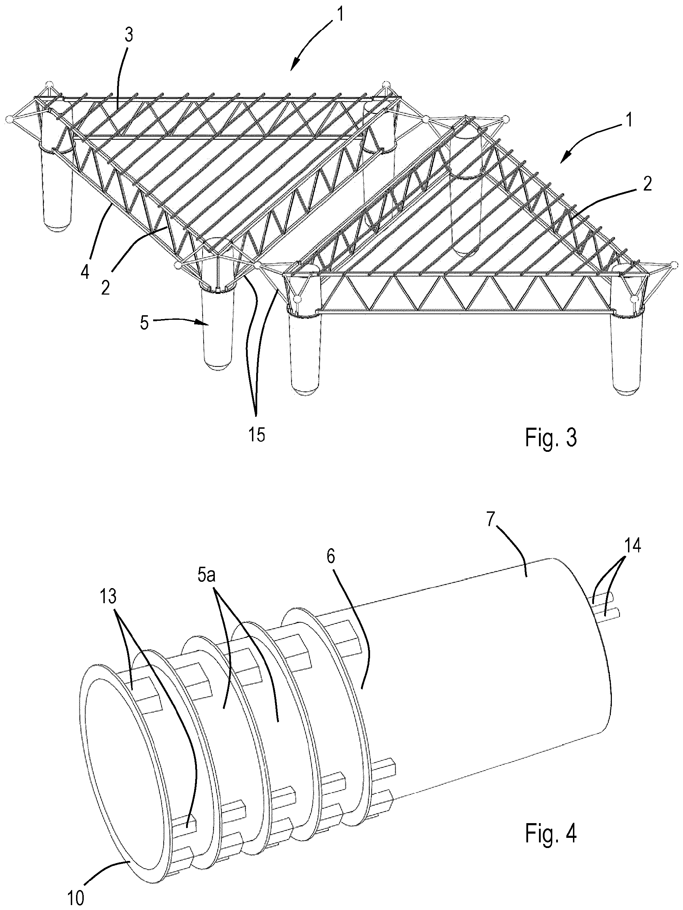

The upper part 5a and the lower part 5b are separate elements which are fixed to each other. Both the upper part 5a and the lower part 5b of the buoyant member 5 are conical such that two of the same upper parts 5a partly fit into each other and two of the same lower parts 5b partly fit into each other before being fixed to each other. This provides the opportunity to transport the upper and lower parts 5a, 5b in an efficient manner to a site where they are assembled in order to form complete buoyant members 5. Fig. 4 shows a series of partly nested upper parts 5a. Referring to Fig. 2, the upper part 5a has a circumferential wall including a lower end portion 6 which has a larger cross-sectional area than an upper end portion 7 thereof, whereas the lower part 5b has a circumferential wall including a lower end portion 8 which has a smaller cross-sectional area than an upper end portion 9 thereof.

The lower end portion 6 of the upper part 5a and the upper end portion 9 of the lower part 5b are provided with cooperating flanges 10 through which the upper part 5a and the lower part 5b are bolted to each other. An upper side of the upper part 5a and a lower side of the lower part 5b are closed by an upper closure 11 and a lower closure 12, respectively.

Referring to Figs. 2 and 4, an outer side of the lower end portion 6 of the upper part 5a is provided with outwardly projecting lower connectors 13 which are welded to the upper part 5a. Beams of the frame 2 are connected to the lower connectors 13. The upper closure 11 of the upper part 5a, i.e. an axial upper end of the upper part 5a, is provided with upper connectors 14. It is undesired to apply outwardly projecting upper connectors at an outer side of the upper end portion 7 of the upper part 5a, since this would make nesting of a series of upper parts 5a more difficult.

Fig. 3 shows two substantially identical floating structures 1 which are interconnected. Both floating structures 1 are provided with pairs of coupling members in the form of pairs of tripods 15 at their corners which are adapted such that the floating structures 1 are allowed to pivot with respect to each other without contacting each other under operating conditions on the water. In order to avoid a collision of the lower parts 5b the distance between the frames 2 is relatively large. This provides the opportunity to locate PV panels beyond outer edges of the upper sides 3 of the respective frames 2, since relative displacement at the height level of the frames 2 is lower than relative displacement of the lower end portions 8 of the lower parts 5b. It is noted that in practice more than two similar floating structures 1 may be pivotally coupled to each other. The tripods 15 are attached to the upper parts 5a of the buoyant members 5, hence forming part of the three-dimensional truss structure of the frame 2. Since the upper parts 5a provide relatively high rigidity at the corners of the frame 2 it is advantageous to provide the tripods 15 at the corners.

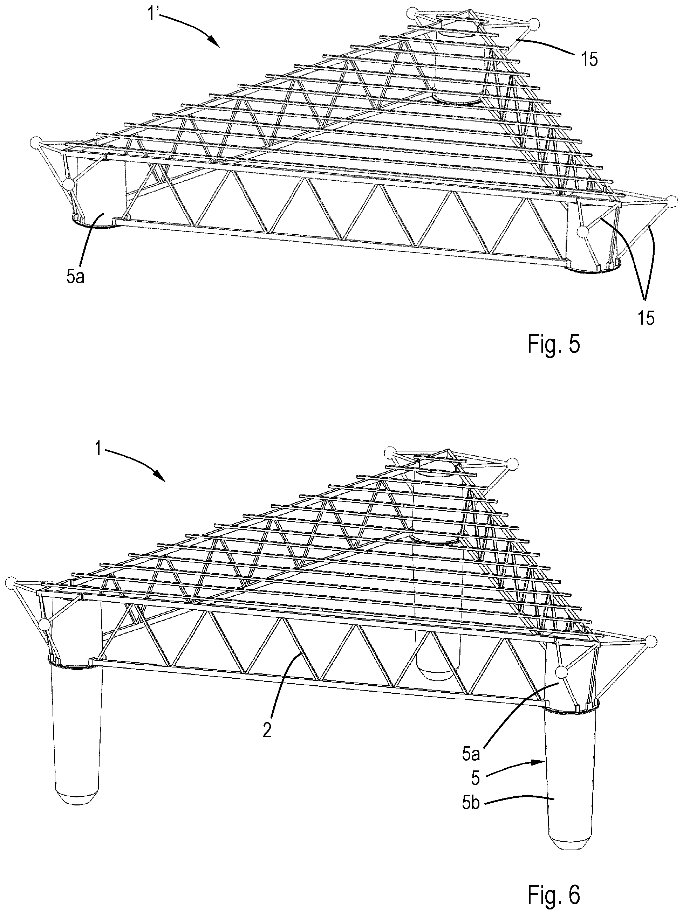

Figs. 5 and 6 show successive steps of a method of assembling a floating structure 1 as shown in Fig. 1. Three of the upper parts 5a are supplied as separate parts and placed in upright orientation on the floor or a building platform at a site where the floating structure 1 is assembled. Beams for forming the three-dimensional truss structure are also supplied as separate parts and fixed to each other and to the upper parts 5a, for example by means of bolting. Furthermore, the tripods 15 are fixed to the corners of the frame 2. This results in an intermediate configuration 1' as shown in Fig. 5. In a next step the intermediate configuration 1' is lifted, for example by a crane (not shown), after which the lower parts 5b of the buoyant members 5 are fixed to the respective upper parts 5a thereof. It is also possible to mount the PV panels and/or further parts on the upper side 3 of the frame 2 before lifting the intermediate configuration 1'.

Under operating conditions the upper parts 5a of the buoyant members 5 may be located above water level, submerged or partly submerged.

From the above, it is clear that the modular design of the buoyant members 5 and the frame 2 facilitate transport, particularly when the upper and lower parts 5a, 5b are shaped such that they can be nested within each other. Additionally, the modular structure makes it easy to assemble the floating structure 1 at any desired location.

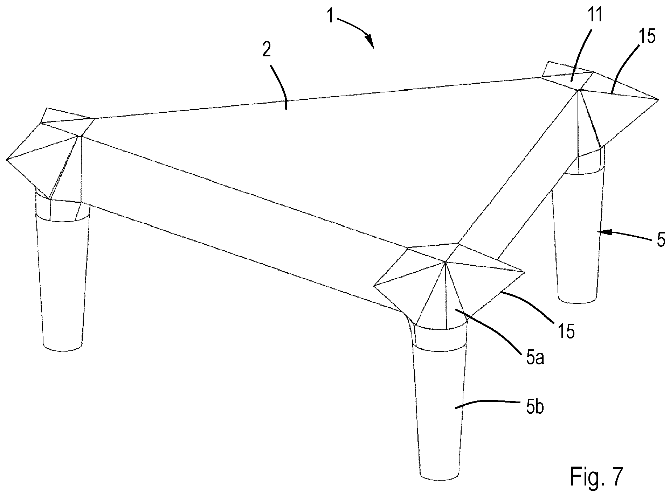

Fig. 7 shows an alternative embodiment of a floating structure 1 which has different upper and lower parts 5a, 5b with respect to the upper and lower parts 5a, 5b in the embodiment as shown in Figs. 1-6. The upper parts 5a in the embodiment as shown in Fig. 7 have shapes which form appropriate supports for the tripods 15. The circumferences of the lower ends of the respective upper parts 5a are partly arched and partly polygonal. The upper end portions of the respective lower parts 5b have cross-sections which are also partly arched and partly polygonal in order to fit to the lower ends of the upper parts 5a. The upper end portion may be a separate transition section which is fixed to the remainder of the lower part 5b.

The invention is not limited to the embodiments shown in the drawings and described hereinbefore, which may be varied in different manners within the scope of the claims and their technical equivalents.

## Claims

1. A floating structure (1) for supporting PV panels, comprising a frame (2) extending in a main plane and a plurality of elongate buoyant members (5) having respective longitudinal directions which extend in transverse direction of the main plane, wherein each of the buoyant members (5) has an upper part (5a) which is located at the frame (2) and a lower part (5b) which projects from a lower side (4) of the frame (2), wherein the frame (2) has a three-dimensional truss structure comprising interconnected beams, wherein the upper parts (5a) of the buoyant members (5) form upright beams of the truss structure.

2. A floating structure (1) according to claim 1, wherein the upper part (5a) has a lower connector (13) and an upper connector (14) for being connected to respective beams of the truss structure, which lower and upper connectors (13, 14) are located at a distance from each other in longitudinal direction of the buoyant member (5).

3. A floating structure (1) according to claim 1 or 2, wherein the frame (2) has a substantially polygonal shape within the main plane including a plurality of corners.

4. A floating structure (1) according to claim 3, wherein the buoyant members (5) are located at the corners.

5. A floating structure (1) according to claim 3 or 4, wherein the frame (2) has a triangular shape.

6. A floating structure (1) according to any one of the preceding claims, wherein the buoyant members (5) have circular cross-sections.

7. A floating structure (1) according to any one of the preceding claims, wherein the length of the lower part (5b) is different from and preferably larger than the length of the upper part (5a) as measured in longitudinal direction of the buoyant member (5).

8. A floating structure (1) according to any one of the preceding claims, wherein the upper part (5a) and the lower part (5b) are separate elements which are fixed to each other.

9. A floating structure (1) according to claim 8, wherein the upper part (5a) has a circumferential wall including a lower end portion (6) which has a larger cross-sectional area than an upper end portion (7) thereof, wherein the circumferential wall diverges in a direction from its upper end portion to its lower end portion such that two of the same upper parts (5a) as separate elements partly fit into each other and an upper closure (11) at an axial upper end of the upper part (5a) .

10. A floating structure (1) according to claim 2 and 9, wherein the lower connector (13) is located at an outer side of the lower end portion (6) and the upper connector (14) is located at an upper side of the upper closure (11).

11. A floating structure (1) according to claim 10, wherein the upper connector (14) and/or lower connector (13) are projections, which are preferably welded to the upper part (5a).

12. A floating structure (1) according to any one of the claims 8-11, wherein the lower part (5b) has a circumferential wall including a lower end portion (8) which has a smaller cross-sectional area than an upper end portion (9) thereof, wherein the circumferential wall diverges in a direction from its lower end portion (8) to its upper end portion (9) such that two of the same lower parts (5b) as separate elements partly fit into each other and a lower closure (12) at an axial lower end of the lower part (5b).

13. A floating structure (1) according to claim 8, wherein the lower part (5b) is releasably fixed to the upper part (5a).

14. A floating structure (1) according to any one of the preceding claims, wherein the interconnected beams of the frame (2) are releasably fixed to each other.
